# EUROPEAN PATENT APPLICATION

(11) **EP 0 973 242 A1**
(43) Date of publication of application: **19.01.2000**
(21) Application number: 99113765.4
(22) Date of filing: 14.07.1999
(51) Int. Cl.: H02K 5/22, H01R 4/30

(54) **Electrical apparatus, in particular an alternator for motor vehicles, having a protector element**

(30) Priority: 17.07.1998 IT TO980624
(71) Applicant: FIAT AUTO S.p.A., 10135 Torino (IT)
(72) Inventor: Grosso, Quirino, 66054 Vasto (Chieti) (IT); Spina, Donato, 10138 Torino (IT)
(74) Representative: Quinterno, Giuseppe

(57) **Abstract**

Electrical apparatus, for example an alternator (1) for a motor vehicle, having a cap (3) with an aperture (4) through which an electric power output cable (5) extends for connection with an electric cable (6) which must extend in a predetermined direction (9) from the said terminal (5). This apparatus includes a protector element (10) of electrically-insulating material of substantially annular shape, the wall (11) of which has an interruption (12) which is greater than the section of the aforesaid cable (6), and has at one end coupling elements (13) operable to enable the element to be rotatably mounted in the aperture (4) of the cap (3). The protector element (10) and the cap (3) also have respective engagement means (16, 18). When the protector element (10) is rotated once mounted in the aperture (4), these engage each other and lock the protector element (10) in an angular position in which its interruption (12) is facing the predetermined direction (9) along which the electric cable (6) must extend.

## Description

The present invention relates to electrical apparatus for motor vehicles.

More specifically, the subject of the invention is an electrical apparatus, in particular an alternator, which includes an end cap with an aperture through which extends an output power terminal for connection with a substantially rigid electric cable which must extend in a predetermined direction from this terminal.

Such a type or model of alternator is frequently fitted on different models of motor vehicle in which, for various reasons, the electric power cable connecting the alternator to the positive pole of the battery must extend in a predetermined direction, which is often different from one model of vehicle to another.

Typically, such a power cable has a considerable cross section and is thus rather rigid.

The connection between the alternator and the said cable is often protected by an insulating cap fitted onto the cable or by elements integral with the cap. The latter arrangement involves the manufacture of a plurality of caps which differ according to the direction in which the said cable must extend once installed, resulting in not inconsiderable problems and costs.

The object of the present invention is to provide an electrical apparatus, and in particular an alternator for a motor vehicle, in which the direction in which the said power cable must extend can be easily identified.

An additional object of the invention is to provide an arrangement which enables the standardized manufacture of the aforesaid cap, without the need for a plurality of caps which are different according to the direction along which the said power cable has to extend once installed.

These and other objects are achieved by the invention by providing electrical apparatus, and in particular an alternator, the main characteristics of which are defined in the appended Claim 1.

Further characteristics and advantages of the invention will become apparent from the detailed description which follows, provided purely by way of non-limitative example, with reference to the appended drawings, in which:
Figure 1 is a partially exploded partial perspective view of an alternator according to the invention;
Figure 2 is a perspective view of a protector element for an alternator according to the invention; and
Figure 3 is a front view of the protector element of Figure 2.

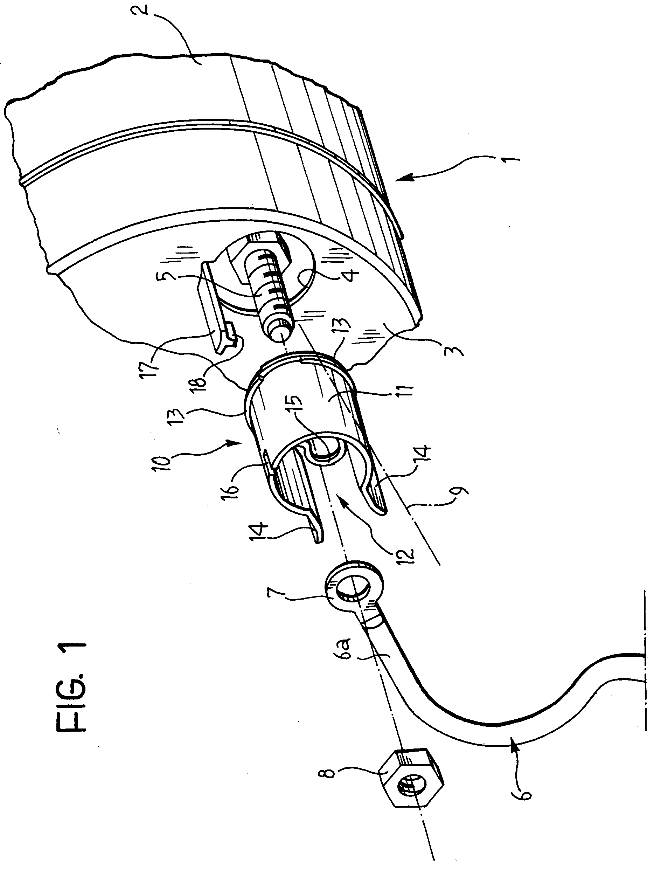

In Figure 1, an alternator for a motor vehicle is generally indicated 1. This alternator includes a support casing 2 with a cap 3 of electrically insulating material connected to one end thereof.

The cap 3 has a substantially circular aperture 4 with an electric power output terminal 5 passing through it, this being in the example illustrated a threaded metal pin. The terminal 5 is intended to be connected to a pole of the battery of a motor vehicle by means of an electric power cable 6. The cross section of this cable is large and rather rigid.

The end portion 6a of the cable 6 is intended for connection to the terminal 5 and has a cable terminal 7 with an eye, for fitting onto the terminal 5.

The connection of the cable 6 to the terminal 5 is secured by a nut 8, for example.

In order to comply with the lay-out in the engine compartment of the motor vehicle, the end portion 6a of the cable 6 must extend from the terminal 5 in a predetermined direction, indicated by a broken line 9 in Figure 1.

In the drawings, a protector element of electrically insulating material, indicated 10, is shaped as a substantially annular band with an interruption 12 in its wall 11. This interruption is wider, in a circumferential direction, than the cross-section of the cable 6.

One end of the protector element 10 has a plurality of external projections 13 aligned around its circumference.

The protector element 10 is preferably made of flexible plastics material, so that it is resiliently compressible.

The ends of the wall 11 of the protector element 10 form respective extensions 14 which face each other and may be pressed towards each other manually thereby causing the protector element to contract.

For convenience, a resilient member 15 can be incorporated into the protector element 10 which tends to counter the compression of the protector element. The resilient member 15 may be formed, for example, in one piece with the protector element 10 or may consist of a shaped metal wire incorporated into the protector element 10 during moulding of this latter.

A seat or notch 16 is formed at the end of the protector element 10 opposite the end bearing the projections 13.

An integral projection 17, essentially parallel to the terminal 5 (Figure 1) extends from the inner face of the cap 3, adjacent the aperture 4. The face of the projection 17 facing the terminal 5 has a projection or tooth 18 the dimensions of which enable it to engage the notch 16 in the protector element 10.

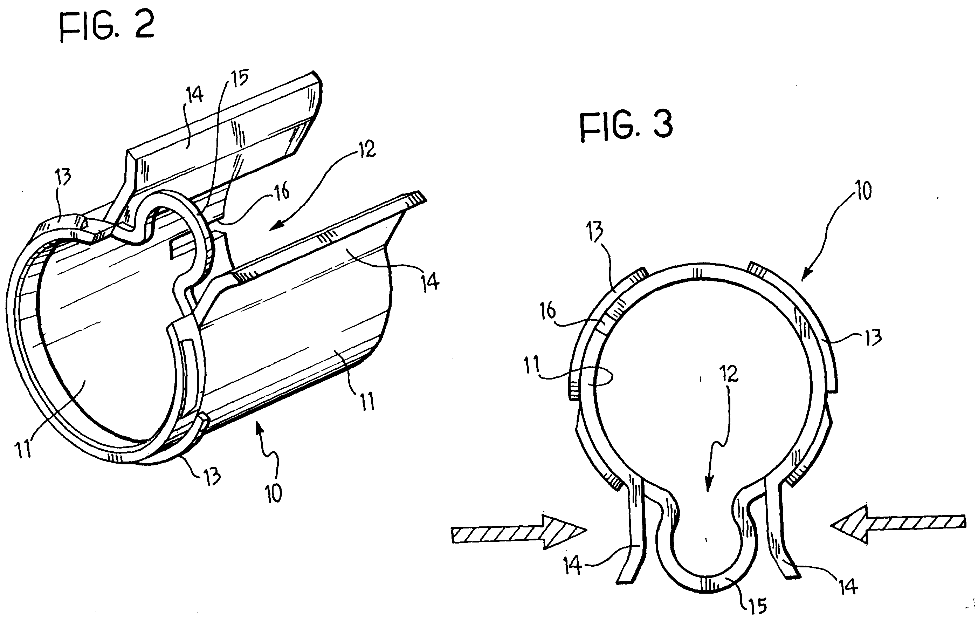

This element can be mounted in the aperture 4 in the cap 3 after being compressed by means of pressure on the extensions 14, as shown in Figure 3. In its compressed state, the protector element 10 can easily be inserted through the aperture 4 in the cap 3 until the projections 13 engage beyond the edge of this aperture. Subsequent release of the extensions 14 allows the protector element 10 to expand once again thanks to its own resilience and to the action of the resilient member 15 incorporated in it.

The protector element 10 thus mounted in the cap is axially locked but rotatable about the axis of its cylindrical wall 11. Rotation of the element 10 mounted in the aperture of the cap enables the seat or notch 16 and the engagement tooth 18 to be positioned so that they can be coupled or engaged.

The seat or notch 16 in the protector element 10 is formed in an angular position whereby, when the said element is rotated in the aperture 4 and the tooth 18 snap-engages the said seat or notch, the protector element 10 is locked into an angular position in which the interruption 12 is facing in the predetermined direction 9 along which the initial portion 6a of the cable 6 is required to extend. Once the protector element 10 is locked in this position, the cable 6 may be coupled to the terminal 5 of the alternator 1 and secured thereto by means of the nut 8.

Once the alternator 1 is fitted in the engine compartment of a motor vehicle, the protector element 10 can be correctly positioned even when the person executing the task cannot see the cap and the protector element directly.

In addition, in the case of an alternator suitable for installing in different models of motor vehicle in which the power cable 6 extends in different directions, it is possible to manufacture a single type or model of cap and associate it with different protector elements 10 having the seat or notch 16 in different angular positions.

A considerable level of standardization is thus achieved, thereby reducing the costs involved in meeting the requirements of different lay-outs.

Furthermore, it is extremely easy to manufacture protector elements with seats or notches in different positions, using a single mould with movable inserts.

The principle of the invention remaining unchanged, it is naturally possible to vary widely the embodiments and manufacturing details thereof from those described and illustrated purely by way of non-limitative example, without departing thereby from the scope of the invention, as claimed in the appended claims.

The invention is not intended to be limited to the embodiment illustrated, in which the protector element 10 has a notch and the cap 3 has a tooth. The scope of the invention also covers an arrangement whereby the tooth is formed on the protector element and the seat or notch is integrally formed with the cap.

Furthermore, the invention is not limited to embodiments in which a resilient member is associated with the protector element.

## Claims

1. Electrical apparatus, in particular an alternator (1) for a motor vehicle, which includes a cap (3) with an aperture (4) through which an electric power output terminal (5) extends for connection with an electric cable (6) which must extend in a predetermined direction (9) from the said terminal (5);
characterised in that it includes a protector element (10) of electrically insulating material which is substantially annular, its wall (11) having an interruption (12) greater than the cross-section of the said cable (6); the protector element (10) having coupling means (13) at one end enabling it to be rotatably mounted in the said aperture (4) of the cap (3);
the protector element (10) and the cap (3) also having respective first and second engagement means (16, 18) operable, when the protector element (10) is rotated once mounted in the aperture (4), to engage with each other and to lock the protector element (10) in an angular position in which its interruption (12) faces in the said predetermined direction (9).

2. Apparatus according to Claim 1, characterised in that the said engagement means of the protector element (10) include a plurality of circumferentially aligned external projections (13), operable to snap-engage beyond the rim of the aperture (4) of the cap (3).

3. Apparatus according to Claim 2, characterised in that the said protector element (10) is resiliently compressible so as to facilitate the engagement of the said projections (13) beyond the rim of the aperture (4) of the cap (3).

4. Apparatus according to Claim 3, characterised in that the ends of the protector element (10) have respective facing extensions (14) which can be moved towards each other by hand.

5. Apparatus according to either Claim 3 or Claim 4, characterised in that the protector element (10) has a resilient member (15) coupled thereto which tends to counter compression thereof.

6. Apparatus according to Claim 5, characterised in that the said resilient member (15) is formed integrally with the protector element (10).

7. Apparatus according to Claim 5, characterised in that the said resilient member comprises a metal wire (15) partially embedded in the said protector element (10).

8. Apparatus according to any one of the preceding claims, characterised in that the said engagement means includes a seat or notch (16) formed in the wall (11) of the protector element (10), and a tooth or catch (18) integral with the cap (3) and operable to snap-engage the said seat or notch (16).
